Europäisches Patentamt

European Patent Office

Office européen des brevets

(19)

(11) Numéro de publication : **0 091 386**
**B1**

(12) FASCICULE DE BREVET EUROPÉEN

(45) Date de publication du fascicule du brevet :
17.07.85

(51) Int. Cl.⁴ : **C 22 B 21/06, C 22 B 9/02**

(21) Numéro de dépôt : 83420055.2

(22) Date de dépôt : 23.03.83

(54) **Procédé de purification de métaux par ségrégation.**

(30) Priorité : 30.03.82 FR 8205826

(43) Date de publication de la demande :
12.10.83 Bulletin 83/41

(45) Mention de la délivrance du brevet :
17.07.85 Bulletin 85/29

(84) Etats contractants désignés :
AT BE CH DE GB IT LI LU NL SE

(56) Documents cités :
FR-A- 1 594 154
FR-A- 2 285 915
FR-A- 2 359 210
US-A- 3 211 547
US-A- 3 303 019
US-A- 4 221 590
REVUE DE L'ALUMINIUM, mai 1974, pages 289-290,
Paris FR; "Le raffinage de l'aluminium"
COMPTES RENDUS DE L'ACADEMIE DES SCIENCES
DE PARIS, vol 272, série C, 25 janvier 1971, pages
369-372, Paris FR; D. BRUNAUD et al.: "Formation
dans les alliages d'une zone intermédiaire d'équilibre entre solide et liquide. Application à la détermination des coefficients de partage"

(73) Titulaire : **ALUMINIUM PECHINEY**
**23, rue Balzac**
**F-75008 Paris (FR)**

(72) Inventeur : **Wintenberger, Michel-Georges**
**195, rue du Faubourg St-Honoré**
**F-75008 Paris (FR)**

(74) Mandataire : **Vaniaer, Marcel et al**
**PECHINEY 28, rue de Bonnel**
**F-69433 Lyon Cédex 3 (FR)**

Jouve, 18, rue St-Denis, 75001 Paris, France

## Description

La présente invention est relative à un procédé de purification de métaux par ségrégation applicable en particulier à l'aluminium.

Dans différents secteurs de la technique et, notamment, dans celui de la fabrication de condensateurs électrolytiques du type haute et moyenne tension, on s'oriente de plus en plus vers l'utilisation d'aluminium ne renfermant que quelques parties par million d'impuretés telles que le fer et le silicium en particulier.

Or, on sait que l'aluminium provenant notamment de l'électrolyse de l'alumine peut avoir une concentration en impuretés de l'ordre de plusieurs centaines de parties par million. Il s'est donc avéré nécessaire de pouvoir disposer de procédés permettant d'obtenir des aluminiums très purs.

L'un de ces procédés consiste à raffiner l'aluminium en présence de cuivre par une électrolyse dite trois couches. Mais, il a l'inconvénient d'être d'exploitation relativement chère et de ne pas toujours permettre d'obtenir une pureté suffisante en certains éléments, notamment en fer et en silicium.

Un autre fait appel à la ségrégation, opération consistant à provoquer par refroidissement la cristallisation partielle d'une masse métallique fondue, puis à séparer la phase solide purifiée en certains éléments dits eutectiques de la phase liquide enrichie en ces mêmes éléments.

C'est dans cette deuxième voie que se place la présente invention. Les éléments eutectiques tels que le fer, le silicium, le cuivre, le magnésium, le zinc, présentent tous les caractéristiques de former avec l'aluminium, et pour une concentration déterminée, des alliages dits eutectiques dont la température de solidification, lorsqu'on les refroidit à partir de l'état liquide, est inférieure à celle de l'aluminium pur.

Si l'on soumet de l'aluminium liquide, contenant ces éléments en quantité inférieure à la concentration eutectique, à un refroidissement, on sait que les cristaux d'aluminium qui apparaissent au sein du liquide-mère sont plus purs que ce dernier. Un tel phénomène est décrit au moyen des diagrammes d'équilibre binaires liquide-solide, qui permettent de connaître dans le domaine de température où existent les deux phases et pour un couple : métal de base-élément eutectique donné, la concentration $C_S$ à laquelle se trouve cet élément dans le solide lorsqu'il est en équilibre avec un liquide où il est en concentration $C_L$. Le rapport $k = C_S/C_L$ inférieur à 1, dit coefficient de partage, est caractéristique de chaque élément eutectique et dépend très peu de sa concentration dans l'alliage.

Dans la pratique, si on désigne par $C_O$ la concentration du métal à purifier en chacune de ces impuretés, on obtient dans la phase purifiée un produit dans lequel cette concentration est ramenée à C. On traduit généralement l'efficacité de l'opération par le coefficient de purification correspondant pour chaque impureté au rapport $C_O/C$.

Plusieurs procédés basés sur cette technique ont déjà, à notre connaissance, été brevetés et on constate, à la lecture des exemples de réalisation de quelques-uns d'entre eux, que les coefficients de purification atteints sont supérieurs à ceux qu'on déduit des coefficients de partage. Ce résultat, tout à fait surprenant, tient à la mise en œuvre, lors de l'application de ces procédés, de moyens complémentaires ayant pour effet de modifier les états d'équilibre et d'améliorer ainsi la purification.

On peut citer parmi ceux-ci :

US-A-3 303 019, déposé en 1964, qui concerne un procédé dans lequel on verse une masse d'aluminium fondue dans un récipient non chauffé dont les parois latérales et le fond sont conçus de manière à limiter les pertes de chaleur. Ce récipient est ouvert à sa partie supérieure, son fond est essentiellement plat, ses parois latérales verticales et il est muni d'un orifice de soutirage. Ses dimensions sont telles que, pour une charge de 700 kg, le métal occupe une hauteur de 37,5 cm et présente une surface de contact avec l'air de 8 700 cm$^2$, soit un rapport entre ces deux grandeurs, de 4/1 000. Par évacuation de la chaleur de solidification à la surface de contact, il y a initiation de la cristallisation et, durant cette cristallisation fractionnée, le lit de cristaux se formant dans la partie inférieure du récipient est soumis à une pression appliquée de façon intermittente par un pilon se déplaçant verticalement. A la fin du processus de cristallisation, c'est-à-dire quand environ 70 % de la masse a cristallisé, l'orifice de soutirage est ouvert et environ 12 % en poids de la masse initiale est évacuée sous forme de liquide-mère. Puis, un flux thermique est appliqué à la surface de la masse de cristaux, de manière à provoquer une refusion, et on prélève successivement 16,6 % de liquide, l'orifice de soutirage étant ouvert à plein, puis 40 % en réduisant la vitesse de prélèvement, et enfin, les 31,4 % restants. Ce dernier prélèvement fournit un métal contenant 30 ppm de silicium et 10 ppm de fer alors que la masse de départ renfermait respectivement 420 et 280 ppm ; ceci correspond à des coefficients de purification de 14 pour le silicium et de 28 pour le fer. Sachant que les coefficients de partage du silicium et du fer sont environ 0,14 et 0,03, on en déduit que la purification du fer est légèrement inférieure à celle correspondant au coefficient de partage (1/0,03 = 33) mais que, par contre, celle du silicium est environ deux fois supérieure à cette valeur (1/0,14 ≈ 7),

le brevet français 1 594 154, déposé en 1968, enseigne un procédé de purification consistant :

à provoquer une solidification progressive au sein d'un volume de métal liquide maintenu au voisinage de son point de fusion dans un récipient chauffé extérieurement, en y plongeant un corps refroidi intérieurement,

à rassembler au fond du récipient l'ensemble de petits cristaux qui se forment,

à provoquer la formation de gros cristaux d'environ 1 cm de diamètre, à l'intérieur desquels on observe des cellules dont les dimensions voisines de 1 mm font penser qu'elles sont la trace de petits cristaux, phénomène au cours duquel la liqueur-mère est refoulée progressivement vers le haut du récipient,

à séparer la fraction purifiée à gros cristaux de la fraction qui s'est enrichie en impuretés.

On peut remarquer sur les figures de ce brevet que le rapport hauteur sur section du récipient utilisé est nettement plus important que celui de US-A-3 303 019.

Citons deux résultats tirés des exemples de ce brevet :

1. A partir d'un aluminium contenant 320 ppm de silicium et 270 ppm de fer, on obtient une fraction purifiée représentant 70 % de la masse d'aluminium de départ contenant 20 ppm de silicium (soit un coefficient de purification de 16) et 15 ppm de fer (soit un coefficient de purification de 18). On peut noter le rendement très élevé de cette opération (70 %) conduisant à des coefficients de purification eux-mêmes très élevés, celui du silicium étant supérieur à celui que donne le coefficient de partage de cet élément.

2. A partir d'un aluminium contenant 620 ppm de silicium et 550 ppm de fer, il a été obtenu sur 50 % de la masse initiale de métal une fraction purifiée contenant 40 ppm de silicium et 10 ppm de fer, ce qui représente des coefficients de purification de 15,5 pour le silicium et de 55 pour le fer. On voit donc que, par rapport au brevet US. 3 303 019, le brevet français 1 594 154 permet d'obtenir avec des rendements supérieurs (50 % au lieu de 30 %) un métal ayant des coefficients de purification plus élevés : 15,5 au lieu de 14 pour le silicium et 55 au lieu de 28 pour le fer.

On voit de plus que, pour le silicium et le fer, les coefficients de purification sont alors nettement supérieurs à ceux déduits des coefficients de partage. Ce résultat est d'autant plus surprenant que, comme les petits cristaux qui se forment sont plus purs en éléments eutectiques que le liquide, ce dernier s'enrichit en impuretés au fur et à mesure que la cristallisation progresse, ce qui devrait conduire à une purification moins poussée de la masse cristallisée. .

Ce résultat a été étudié et décrit dans la Revue de l'Aluminium (Mai 1974 p. 290) comme résultant d'un processus de « refusions successives in situ ».

Par ailleurs, une publication antérieure d'un des auteurs du brevet dans les Compte-Rendus de l'Académie des Sciences de France (t. 272, p. 369, série C, 1971) montrait qu'un métal impur placé dans un gradient de température couvrant l'intervalle entre le solidus et le liquidus tend, en quelques minutes, à se mettre, par un processus de fusions et de solidifications, à l'état d'équilibre, celui-ci étant obtenu quand, dans l'intervalle entre le solidus et le liquidus, le métal est complètement solide avec des concentrations d'impuretés égales à celles données par le solidus à la température locale.

Ceci montre que les petits cristaux initialement formés à partir de la liqueur-mère ont tendance, après décantation, à prendre la composition qui est donnée par le solidus à la température à laquelle ils se trouvent et, donc, à se purifier par rapport à leur concentration initiale s'ils sont à une température plus élevée que celle de leur formation ; ce qui est possible puisque le récipient dans lequel ils sont est chauffé de telle manière qu'avant l'introduction du corps refroidi, la masse d'aluminium est complètement fondue.

US-A-4 221 590, déposé en 1978, reprend les mêmes moyens que ceux décrits dans US-A-3 303 019, mais en y ajoutant l'introduction d'un chauffage du fond et des parois du récipient.

D'après les auteurs, cette refusion partielle permet une remise à l'équilibre de la concentration des petits cristaux, d'améliorer les performances et d'obtenir des coefficients de purification supérieurs à ceux déduits des coefficients de partage. Comme on l'a indiqué plus haut, ce résultat était déjà obtenu dans les brevets cités.

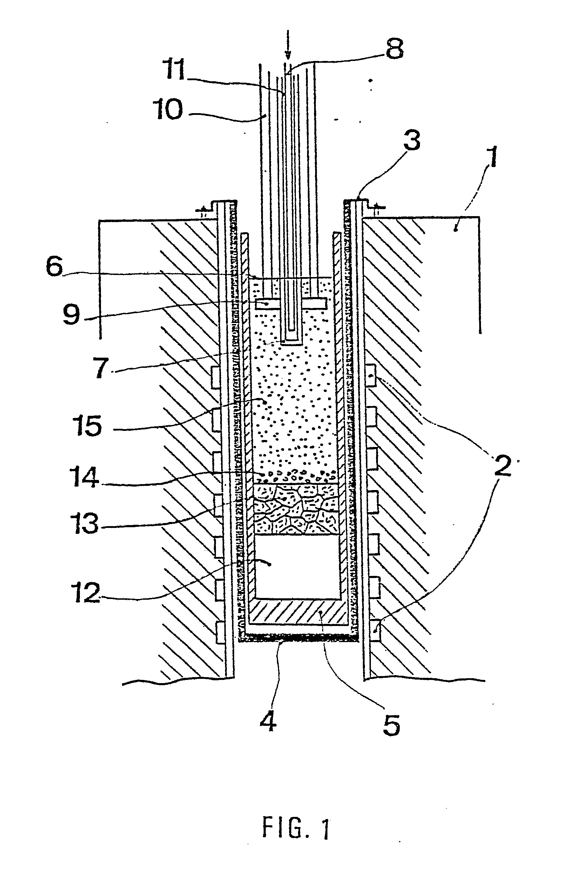

Toutefois, si l'on examine la figure 2 qui donne les résultats de purification en silicium en fonction de la quantité d'aluminium enlevée de l'unité de cristallisation, on constate que l'amélioration par rapport à US-A-3 303 019 porte surtout sur les premiers 40 % de la masse purifiée dont la teneur semble passer de 250 ppm à 100 ppm environ ; par contre, pour les 30 % restants, la teneur est sensiblement la même et voisine de 20 à 30 ppm. Certes, on cite bien également que des puretés très élevées de l'ordre de 3 ppm de Fe sont obtenues, mais sans préciser sur quelle quantité de métal elles ont été constatées.

En conclusion, il semble que dans les deux brevets US précités les rendements et les purifications sont moins bons que dans le brevet français, mais que, vraisemblablement, on obtienne sur des quantités non précisées des puretés très élevées, supérieures à celles décrites dans le brevet français.

Si, dans ces trois brevets, les moyens complémentaires permettent d'obtenir des coefficients de purification supérieurs à ceux déduits des coefficients de partage, une distinction importante est à faire sur le rôle que les moyens complémentaires jouent. En effet, dans le brevet français, le métal purifié se présente sous forme d'une masse compacte de gros cristaux ne contenant pas, ou pratiquement pas, de liquide. Par contre, dans US-A-4 221 590, il est dit, d'une part, qu'on facilite le dépôt des cristaux par l'action de la dame qui brise les formations massives de cristaux et, d'autre part, que le chauffage du fond du récipient empêche la congélation de la phase liquide sur la partie inférieure. Autant de précisions qui montrent que, dans ce procédé, on évite la formation d'une masse solide compacte et maintient, au contraire, la présence d'un mélange intime de liquide et de cristaux.

Ainsi donc, dans les deux procédés, on opère sur des masses purifiées dont la constitution est très différente ; dans le brevet français, cette masse est quasiment solide et compacte alors que, dans US-A-4 221 590, c'est un mélange intime non compact de solide et de liquide.

Dans la présente invention, il est proposé d'opérer d'une manière tout à fait différente en ce sens que, si l'on utilise bien le schéma général du procédé du brevet français 1 594 154, on ajuste à chaque instant le flux thermique appliqué au métal de manière que, lorsque la couche de gros cristaux a atteint sur toute sa section une épaisseur suffisante pour ne pas être brisée par l'action de tassement, on provoque, à partir de la base du récipient et sur toute sa section, une refusion progressive des gros cristaux en la propageant vers le haut à une vitesse voisine de celle de la croissance de la couche à sa partie supérieure afin de maintenir sensiblement la même épaisseur de gros cristaux solides entre la partie liquide sous-jacente provenant de la refusion des gros cristaux et la partie supérieure de liqueur-mère à purifier.

Le nouveau procédé consiste donc à purifier le métal par ségrégation en créant un flux thermique pour refroidir à sa partie supérieure une masse en fusion contenue dans un récipient et faire apparaître progressivement au sein du liquide des cristaux que l'on tasse vers le bas en vue de chasser le liquide interstitiel et d'obtenir une couche de gros cristaux ne renfermant pratiquement plus de liquide. Mais, ce qui fait son originalité par rapport au brevet français 1 594 154, c'est l'application d'un régime thermique tel qu'il amène la refusion complète de la partie inférieure des gros cristaux qui se sont formés dans le fond du récipient.

Toutefois, cette refusion n'est pas déclenchée dès l'apparition des gros cristaux. On attend, en effet, d'en avoir une couche d'épaisseur suffisante pour qu'elle soit étanche et puisse présenter une rigidité convenable pour ne pas se briser lorsqu'elle se trouvera placée entre deux parties liquides et qu'elle subira l'action des dames destinées au tassement des petits cristaux qui sont formés à la partie supérieure du récipient. En effet, toute fissure ou trou dans cette couche conduirait à un échange direct entre les deux phases liquides et serait extrêmement nuisible à l'efficacité de la purification.

Lorsque la couche a atteint l'épaisseur requise, on établit le régime thermique propre à amener la refusion des gros cristaux sous-jacents. Comme la croissance de la couche de gros cristaux résulte du dépôt sur sa partie supérieure de petits cristaux qui se déposent par gravité, de leur étalement, de leur tassement et de leur « frittage » par des dames qui couvrent toute la surface de dépôt, cette croissance s'effectue dans un plan à peu près horizontal. Le flux thermique est alors ajusté pour refondre la couche régulièrement sur toute sa surface de manière à réaliser l'épaisseur voulue sur toute la section. Puis, ce flux développe ses effets progressivement vers le haut suivant une vitesse correspondant à la vitesse de croissance de la partie supérieure de la couche de gros cristaux afin de la maintenir à l'épaisseur voulue.

On a donc constamment dans le récipient une couche de gros cristaux d'épaisseur constante qui forme barrière entre le liquide extrêmement pur de la zone inférieure qui provient de la refusion et le liquide impur de la zone supérieure dans lequel on initie la cristallisation des petits cristaux.

Le processus peut être arrêté à tout moment. On procède alors généralement à la vidange du liquide surnageant impur, tandis que l'on peut soutirer le liquide provenant de la refusion, puis récupérer la couche de gros cristaux. On peut ainsi laisser l'ensemble se solidifier complètement par refroidissement et procéder, par des opérations de sciage, à la récupération de la fraction purifiée ou même débiter celle-ci en plusieurs fractions.

Ce nouveau procédé permet d'obtenir, avec un rendement très élevé, des coefficients de purification nettement supérieurs à ceux atteints dans le brevet français.

Le mécanisme de cette purification n'est pas parfaitement clair, toutefois, on peut essayer d'en donner une explication.

Le fait de refondre la partie sous-jacente des gros cristaux jusqu'à une épaisseur compatible avec la résistance mécanique convenable permet de porter la couche restante de gros cristaux à la température la plus élevée possible et, d'après ce qui a été dit plus haut, notamment dans le Compte-Rendu à l'Académie des Sciences, d'obtenir les puretés les plus élevées possibles.

Le flux thermique propre à créer la refusion et à la développer progressivement vers le haut peut être obtenu par tout système de chauffage connu de l'homme de l'art. Néanmoins, il nécessite des moyens de régulation permettant de piloter la vitesse de formation des petits cristaux, la vitesse de montée de la partie supérieure de la couche de gros cristaux ainsi que la vitesse de refusion des gros cristaux sous-jacents de façon à maintenir une épaisseur convenable de gros cristaux.

La présente invention sera mieux comprise à l'aide de la figure jointe qui représente en coupe une forme possible de réalisation de l'appareillage de purification telle qu'elle a été réalisée au laboratoire. Dans un four vertical (1), équipé d'éléments de chauffage indépendants les uns des autres (2), est placé un récipient en acier inoxydable (3) recouvert d'un calorifuge (4) et qui contient un creuset en graphite (5). Le creuset est rempli presque complètement de métal à purifier à l'état liquide jusqu'au niveau (6). Le chauffage du four est réglé de telle manière que l'ensemble creuset et métal liquide soit initialement porté à une température T supérieure à celle du point de fusion du métal à purifier. L'ensemble (7, 8, 9, 10) est appelé plongeur. La pièce (7) est un tube borgne en graphite dans lequel se trouve une conduite de gaz comprimé (8). Cet ensemble (7, 8) constitue l'organe refroidisseur. Le tube (7) est entouré d'un anneau en graphite (9) muni de tiges en graphite (10) qui sortent du bain et permettent de faire coulisser l'anneau (9) le long du tube (7). Au commencement de l'opération de purification proprement dite, la pièce (7) est introduite dans le liquide ce qui permet d'abaisser la température du métal depuis la température T jusqu'à la température de solidification ; le gaz qui s'est réchauffé à son contact est évacué par l'espace annulaire (11). Au bout d'un certain temps, des cristaux se forment sur les parois et le fond du tube (7).

En choisissant convenablement la puissance de chauffage du four, les dimensions extérieures du tube (7) et le débit du fluide froid dans la conduite (8), il est possible de contrôler le débit d'évacuation des calories et, par conséquent, de choisir la vitesse de solidification du métal. Une vitesse de solidification lente favorise la pureté des cristaux ; la combinaison four plus plongeur permet donc d'agir sur celle-ci et de la régler avec une très grande commodité.

En abaissant l'anneau de graphite (9), les cristaux qui se sont formés sur les parois froides du tube (7) sont détachés par un effet de raclage. Les cristaux, plus denses que le liquide qui leur a donné naissance, tombent au fond du récipient. L'anneau (9) sert également à tasser périodiquement, par un mouvement de va-et-vient, les cristaux au fond du récipient. La partie centrale de la masse des cristaux est tassée de temps à autre à l'aide du fond du tube (7).

L'ensemble des opérations précédentes est renouvelé autant de fois qu'il est jugé nécessaire. On remonte progressivement le tube (7) au fur et à mesure que la solidification progresse. On obtient ainsi, au fond du récipient, une couche de gros cristaux ayant des diamètres de l'ordre du cm dont un examen, après prélèvement d'un échantillon, montre qu'ils sont constitués de cellules dont les dimensions, de l'ordre de 1 mm, font penser qu'elles sont la trace de petits cristaux qui se sont déposés.

Lorsque la couche de ces gros cristaux a atteint une épaisseur convenable, ce qu'on peut évaluer par la course de l'anneau lors de l'opération de tassement, on ajuste le flux thermique au moyen du dispositif de chauffage (2) de façon à provoquer, à partir de la base du récipient, et sur toute sa section, une refusion complète des gros cristaux et à propager progressivement cette refusion vers le haut tout en continuant à faire fonctionner le plongeur.

Au bout d'un certain temps, on trouve, disposés dans le récipient de bas en haut, une partie liquide (12) provenant de la refusion et présentant une très grande pureté, une couche de gros cristaux (13) des petits cristaux (14) déposés et non encore transformés en gros cristaux et la liqueur-mère restante (15).

Pour interrompre la purification, il suffit de retirer le plongeur du récipient et d'interrompre le chauffage puis, soit de vidanger immédiatement le liquide (15), soit le laisser se solidifier en même temps que le liquide refondu (12). On recueille alors une masse qu'on peut scier perpendiculairement à son axe longitudinal pour obtenir des tranches de puretés différentes.

Les exemples d'application suivants ont pour but d'illustrer l'invention :

Exemple 1

Dans un dispositif analogue à celui représenté sur la figure, on a versé 4 kg d'aluminium contenant 550 ppm de fer et 620 ppm de silicium et maintenu en permanence le réglage du four tout en refroidissant la partie supérieure par un courant d'azote. L'opération a duré quatre heures et, à cet instant, la partie supérieure de la zone à gros cristaux atteignait 50 % de la hauteur de métal initial alors que la zone sous-jacente, complètement refondue, représentait 30 % de la masse mise en œuvre. Des analyses du produit obtenu, effectuées par spectrographie, ont donné les résultats suivants :

— sur les gros cristaux

à la partie basse de la couche :
| | |
|---|---|
| Fe : | 5 ppm |
| Si : | 25 ppm |

à la partie haute de la couche :
| | |
|---|---|
| Fe : | 50 ppm |
| Si : | 150 ppm |

— sur la zone refondue

| | |
|---|---|
| Fe : | 2 ppm |
| Si : | 8-9 ppm |

ce qui correspond à des coefficients de purification, pour le fer, de 275 et, pour le silicium, de 73 sur 30 % de la masse initiale d'aluminium et ceci, malgré les difficultés de mise en œuvre sur de petites quantités. Il faut noter, de plus, le très fort gradient de concentration en fer et silicium dans la couche de gros cristaux, ce qui, par rapport au brevet français cité, montre la grande efficacité de la refusion de la partie inférieure de la masse purifiée. la concentration en impuretés augmente d'ailleurs très rapidement quand on s'approche du haut de la couche de gros cristaux.

Exemple 2

Une opération industrielle a été menée à partir d'une tonne d'aluminium ayant les mêmes teneurs en fer et en silicium que dans l'exemple 1. La couche de gros cristaux, à la fin de l'opération, représentait 20 % de la masse totale, tandis que la zone refondue correspondait à 50 % de ladite masse.

Les résultats obtenus par analyse spectrographique ont été les suivants :

— sur les gros cristaux

| | |
|---|---|
| Fe : | 4 ppm |
| Si : | 20 ppm |

— sur la zone refondue

Fe :                                          3 ppm
Si :                                          9 ppm

Ainsi, on a réalisé simultanément avec un rendement de 20 % des coefficients de purification de 137 pour le fer et de 31 pour le silicium et, avec un rendement de 40 %, des coefficients de 183 pour le fer et de 69 pour le silicium, c'est-à-dire que, pour 70 % du produit récupéré, ces coefficients ont respectivement pour valeur 168 et 52.

Ces résultats montrent la très grande efficacité du nouveau procédé par rapport à ceux connus jusqu'ici.

Exemple 3

Le même procédé a été appliqué à d'autres métaux et alliages que l'aluminium tels que, par exemple, le plomb et le zinc. Dans le cas du zinc additionné d'environ 1 000 ppm d'aluminium, les résultats analytiques ont été les suivants :
— sur la zone refondue représentant 30 % de la masse initiale, la teneur en Al était inférieure à 50 ppm ;
— dans la zone de gros cristaux représentant 20 % de la masse totale, cette teneur se situait entre 50 et 100 ppm.

On peut ainsi juger de la très grande efficacité du procédé de l'invention au regard de celle des procédés antérieurs.

Le procédé est également applicable à d'autres qualités d'aluminium que celles exemplifiées et qui, par exemple, sont décrits dans les normes de l'Aluminium Association sous les appellations générales 1 000, 1 100 et 1 200 tels que le 1 050, le 1 230, etc...

Le procédé s'applique aussi à un métal qui a déjà été préalablement purifié en partie par tout moyen connu. Cette purification partielle préalable peut avoir porté sur les éléments péritectiques présents tels que, par exemple, le titane et le vanadium qu'on peut enlever de façon connue de l'aluminium par un traitement au bore.

Outre l'aluminium et le zinc, l'application de ce procédé s'étend à d'autres métaux tels que le plomb, le magnésium, le silicium contenant des éléments eutectiques en quantités hypoeutectiques.

**Revendications**

1. Procédé de purification de métaux et notamment de l'aluminium par ségrégation, dans lequel on crée un flux thermique pour refroidir à sa partie supérieure une masse métallique fondue contenue dans un récipient chauffé et provoquer l'apparition progressive de petits cristaux, on tasse ces derniers au fond du récipient pour obtenir une couche de gros cristaux ne renfermant pratiquement plus de liquide, caractérisé en ce que l'on ajuste à chaque instant le flux thermique de manière que, lorsque la couche de gros cristaux a atteint sur toute sa section une épaisseur suffisante pour ne pas être brisée par l'action du tassement, on provoque, à partir de la base du récipient et sur toute sa section, une refusion progressive de gros cristaux en la propageant vers le haut à une vitesse voisine de celle de la croissance de la couche à sa partie supérieure afin de maintenir sensiblement la même épaisseur de gros cristaux solides entre la partie liquide sous-jacente provenant de la refusion de gros cristaux et la partie supérieure de liqueur-mère à purifier.

2. Procédé de purification selon la revendication 1, caractérisé en ce qu'il est appliqué à de l'aluminium décrit dans les normes de l'Aluminium Association sous les appellations 1 000, 1 100 et 1 200.

3. Procédé de purification selon la revendication 1, caractérisé en ce qu'il est appliqué au zinc, plomb, magnésium, silicium.

4. Procédé de purification selon la revendication 1, caractérisé en ce qu'il est appliqué à un métal préalablement purifié en partie.

5. Procédé de purification selon la revendication 4, caractérisé en ce qu'il est appliqué à un métal préalablement purifié en ses impuretés péritectiques.

6. Procédé de purification selon la revendication 5, caractérisé en ce que le métal est l'aluminium préalablement purifié en ses impuretés péritectiques telles que titane et vanadium, par un traitement au bore par exemple.

**Claims**

1. A process for purifying metals and in particular aluminium by segregation, wherein a thermal flux is generated to cool in its upper part a molten metal mass contained in a heated container, and to cause small crystals progressively to appear, wherein said crystals are compacted at the bottom of the container to produce a layer of large crystals which then contain virtually no liquid, characterised in that the thermal flux is adjusted at each moment in such a way that, when the layer of large crystals has attained over its entire section a sufficient thickness as not to be broken by the compacting action, the large crystals are caused progressively to re-melt, starting from the base of the container, over the entire section thereof, whith the re-melting action being propagated upwardly at a speed close to the speed of growth of the layer in its upper part, in order to maintain substantially the same thickness of large solid crystals between the subjacent liquid part resulting from re-melting of large crystals and the upper part of mother liquor to be purified.

2. A purification process according to claim 1, characterised in that it is applied to the aluminium set forth in the standards of the Aluminium Association under the designations 1 000, 1 100 and 1 200.

3. A purification process according to claim 1, characterised in that it is applied to zinc, lead, magnesium and silicon.

4. A purification process according to claim 1, characterised in that it is applied to a metal which has been previously partially purified.

5. A purification process according to claim 4, characterised in that it is applied to a metal which has been previously purified in respect of its peritectic impurities.

6. A purification process according to claim 5, characterised in that the metal is aluminium which has been previously purified in respect of its peritectic impurities such as titanium and vanadium, for example by a boron treatment.

## Patentansprüche

1. Verfahren zum Reinigen von Metallen, insbesondere von Aluminium, durch Absondern, bei dem man einen Wärmefluß erzeugt zur Kühlung einer in einem erhitzten Behälter enthaltenen Metallschmelze an deren Oberteil und zur Herbeiführung des fortschreitenden Auftretens von kleinen Kristallen, und bei dem die letzteren am Boden des Behälters angehäuft werden, um eine Schicht aus großen Kristallen zu erhalten, die praktisch keine Flüssigkeit mehr enthält, dadurch gekennzeichnet, daß man in jedem Augenblick den Wärmefluß derart einstellt, daß, wenn die Schicht aus großen Kristallen auf ihrem gesamten Querschnitt eine ausreichende Dicke erreicht hat, um nicht durch die Anhäufwirkung zerbrochen zu werden, man ausgehend von der Basis des Behälters und auf seinem gesamten Querschnitt ein fortschreitendes Wiedereinschmelzen von großen Kristallen dadurch bewirkt, daß es nach oben mit einer Geschwindigkeit fortschreitet, die derjenigen des Wachsens der Schicht an ihrem Oberteil nahekommt, um im wesentlichen dieselbe Dicke von großen festen Kristallen zwischen dem vom Wiedereinschmelzen von großen Kristallen stammenden darunterliegenden flüssigen Teil und dem darüberliegenden Teil aus zu reinigender Stammlösung aufrechtzuerhalten.

2. Reinigungsverfahren nach Anspruch 1, dadurch gekennzeichnet, daß es bei Aluminium angewendet wird, das in den Normen der Aluminium Association unter Bezeichnung 1 000, 1 100 und 1 200 beschrieben ist.

3. Reinigungsverfahren nach Anspruch 1, dadurch gekennzeichnet, daß es bei Zink, Blei, Aluminium, Silizium angewendet wird.

4. Reinigungsverfahren nach Anspruch 1, dadurch gekennzeichnet, daß es bei einem Metall angewendet wird, das vorher teilweise gereinigt wurde.

5. Reinigungsverfahren nach Anspruch 4, dadurch gekennzeichnet, daß es bei einem Metall angewendet wird, das vorher von seinen peritektischen Verunreinigungen gereinigt wurde.

6. Reinigungsverfahren nach Anspruch 5, dadurch gekennzeichnet, daß das Metall Aluminium ist, das vorher von seinen peritektischen Verunreinigungen, wie Titan und Vanadium, beispielsweise durch eine Behandlung mit Bor gereinigt wurde.

FIG. 1

1